# EUROPEAN PATENT APPLICATION

(11) **EP 4 156 734 A1**
(43) Date of publication of application: **29.03.2023**
(21) Application number: 21199323.3
(22) Date of filing: 28.09.2021
(51) Int. Cl.: H04W 4/70, H04L 67/1061, H04W 4/02

(54) **METHOD FOR CONTENT DELIVERY CONTROL AND CONTENT DELIVERY BROKER**

(71) Applicant: Deutsche Telekom AG, 53113 Bonn (DE)
(72) Inventor: MINOW, Jascha, 64625 Bensheim (DE); EL MALLOUKI, Said, 56329 St. Goar (DE); JAHN, Carl, 65191 Wiesbaden (DE)
(74) Representative: Vossius & Partner Patentanwälte Rechtsanwälte mbB

(57) **Abstract**

The present disclosure relates to a method for content delivery control in a wireless network, the method comprising: obtaining first information related to content delivery from a base station to a first mobile device; obtaining second information related to content delivery from a base station to a second mobile device; and determining whether to establish a device-to-device, D2D, connection between the first mobile device and the second mobile device for exchanging content based on the first information and the second information.

## Description

The present disclosure relates to methods for content delivery control in a wireless network and to a content delivery broker.

The bandwidth requirements of mobile and stationary devices connected to the Internet are increasing continuously. Due to the high demand for mobility and the desire of users, bandwidth is always needed at any location. Services that until recently did not require an Internet connection are also increasingly dependent on a connection in order to function correctly or even at all. This poses an increasing challenge not only to service and network providers, but also to the users themselves. Also the ecological footprint, which is caused by a constant need for internet connections, increases the challenge on all levels.

Bandwidth and associated Internet access for all and every customer at all times and everywhere cannot always be guaranteed for a variety of reasons, such as economic and technical reasons. However, many services that are used on a daily bases, such as navigation, Instagram, YouTube, Netflix, but also electric vehicle mobility support systems such as charging station finders, etc., are highly dependent on an Internet connection in order to provide content or information, for example. The required radio cells and bandwidths are requested by more and more devices, so that future technologies such as 5G, 6G or the like will also reach their limits, following the principle that an increase in bandwidth usually leads to a disproportionate increase in demand.

In view of the above, it is an object of the present invention to provide a method for content delivery control in a wireless network. The object is achieved with the features of the independent claims. Dependent claims define preferred embodiments of the invention.

The present disclosure provides a method for content delivery control in a wireless network, the method comprising: obtaining first information related to content delivery from a base station to a first mobile device; obtaining second information related to content delivery from a base station to a second mobile device; and determining whether to establish a device-to-device, D2D, connection between the first mobile device and the second mobile device for exchanging content based on the first information and the second information.

Various embodiments may preferably implement the following features.

Preferably, the method further comprises establishing the D2D connection between the first mobile device and the second mobile device for exchanging content based on said determination.

Preferably, the first information comprises at least one of: location data, movement patterns, timestamps of a given piece of content, cellular signal strength, throughput, latencies, historical and/or actual information on needed bandwidth and content for a given location, or actual capacity and utilization of the first mobile device/radio cell.

Preferably, the second information comprises at least one of: location data, movement patterns, timestamps of a given piece of content, cellular signal strength, throughput, latencies, historical and/or actual information on needed bandwidth and content for a given location, or actual capacity and utilization of the second mobile device/radio cell.

Preferably, the method further comprises: upon said determining whether to establish a D2D connection between the first mobile device and the second mobile device, informing the first mobile device and/or the second mobile device about the determination, so that the first mobile device can establish a D2D connection with the second mobile device.

Preferably, the mobile devices that are close to a base station/cell tower are served by the base station only, that is, those mobile devices will operate in the cellular mode.

Preferably, the mobile devices that are far from the base station, in congested areas or at the cell edge or meeting any of the above detailed criteria for insufficient network access and are in proximity of another mobile device, communicate through D2D links.

Preferably, the formation of direct links between mobile devices is dependent on the distance between them, which may be less than or equal to a threshold distance, d0. Thus, D2D link formation may occur when the distance between any two mobile devices, m and n is such that d(m, n) ≤ d0.

Preferably, the method further comprises: after said determining whether to establish a D2D connection between the first mobile device and the second mobile device, continuing to obtaining the first information and the second information; and determining whether to keep the D2D connection between the first mobile device and the second mobile device for exchanging content based on the first information and the second information.

Preferably, the method further comprises: informing the first mobile device and/or the second mobile device to release the D2D connection in case it is determined that the D2D connection is not to be kept.

Preferably, the determining whether to establish and/or keep the D2D connection between the first mobile device and the second mobile device comprises calculating a D2D-score based on the first information and the second information.

Preferably, the calculation of the D2D-score comprises the use of at least one machine learning algorithm.

Preferably, as described above, the formula used to decide whether a D2D connection is established depends in principle on the distance between two devices being less than the distance of one of the two devices to the base station (radio cell/antenna): d(m, n) ≤ d0.

Preferably, the machine learning algorithm calculates a probability (a D2D score) with which a mobile device may establish a D2D connection at a given time, in a given radio cell, and based on the predicted data demand of that device, thus relieving a radio cell and ensuring data transmission for the mobile device. That is, the score preferably calculates the probability that d(m, n) ≤ d0, occurs.

Preferably, the method further comprises determining content that is frequently used and/or areas of weak mobile signal strength and/or base stations that are frequently used; and signaling to a base station to store content based on said determination.

The present disclosure also relates to a content delivery broker comprising: a communication unit configured to receive first information related to content delivery from a base station to a first mobile device and configured to receive second information related to content delivery from a base station to a second mobile device, and a processor configured to determine whether to establish a device-to-device, D2D, connection between the first mobile device and the second mobile device for exchanging content based on the first information and the second information.

The present disclosure also relates to a computer program product comprising a computer-readable program medium code stored thereupon, the code, when executed by a processor, causing the processor to implement a method as described in the foregoing.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 shows a content delivery broker according to an embodiment of the present disclosure.
Fig. 2 shows a flowchart of a method according to an embodiment of the present disclosure.
Fig. 3 shows an example of a schematic diagram of a content delivery broker according to an embodiment of the present disclosure.

The content requirements of users on the Internet are usually distributed among a few specific applications, which together account for 90 or more percent of Internet traffic, such as navigation/map requests, YouTube/social media, to name just the (best-known) examples. Here, too, depending on location and time, users may request the same content from the Internet, which is then repeatedly downloaded or streamed to the device at great expense. This leads to significant redundancies, which then quickly reduce the available bandwidth. In addition, dead spots are a problem for content delivery. That is, even the best network comprises such dead spots from which the users suffer during content delivery.

In an embodiment, a "D2D Content Delivery Broker", based on the use of a mobile 5G-based content delivery network (5G-CDN), is provided to address the aforementioned problems.

In particular, "Device to Device" (D2D) communication techniques implemented in 5G are utilized, which is used to deliver content already on one terminal in a radio cell directly to other terminals in the same radio cell via D2D instead of downloading it to each additional device over the radio cell.

At the same time, in the event of a sudden loss of the radio cell, this allows the content to continue to be obtained from the other terminal via D2D exchange, and even if the connection to the 5G cell tower is lost, the content continues to be available.

In an embodiment, a user drives into/through a radio dead zone in a few minutes. The D2D content delivery broker has already calculated and expected this and, based on the user's route and speed of travel, has named another user's terminal via D2D to which the content, in this case the required map material, is now delivered. As soon as the terminal device leaves the radio dead zone again, the communication is transferred back to the cell tower or the radio cell, if required. As soon as the terminal device leaves the dead zone again, the communication is transferred back to the cell tower or radio cell, if required.

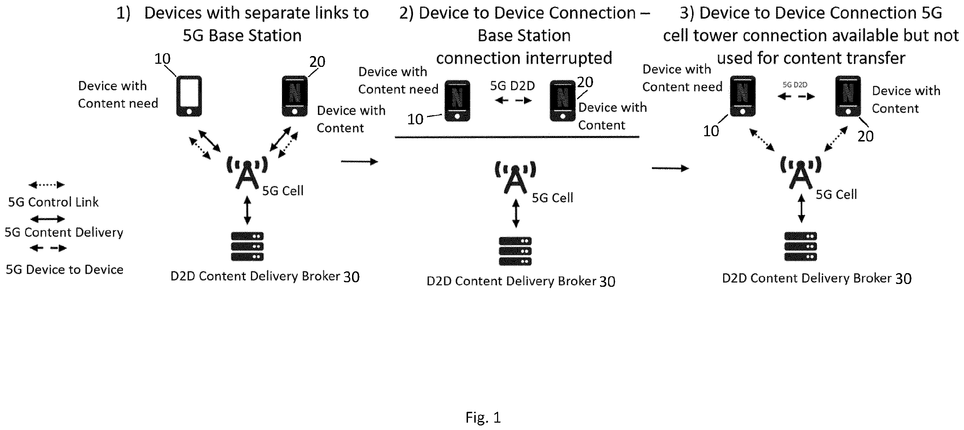

Therefore, the D2D content delivery broker offers features that are explained in more detail in the technical diagram of Fig. 1.

The base Scenario is illustrated at 1) in Fig. 1, where two devices 10, 20 are traveling along each other with a separate and dedicated 5G connection. The first device 10 is currently streaming a video (content) using 5G. The 5G content delivery broker 30 is aware of the activities and location as well as content needs of both devices 10, 20 in the 5G network and to which 5G cell tower they are connected and calculates scenarios using a corresponding predictive algorithm.

Next, as illustrated at 2) of Fig. 1, both devices 10, 20 continue to travel. The first device 10 also starts streaming the same video, but hits a 5G dead spot. The 5G content delivery broker has predicted (based on the location and movement patterns) that a 5G deadzone will be hit. In order to allow the first device 10 continued streaming, it has relayed the 5G connection to the second device 20 having already streamed the video and is in possession of the relevant content on its local storage/cache. Both devices 10, 20 are now connected using a 5G device-to-device (D2D) connection, allowing to stream the needed part of the video directly from one device to the other despite the 5G deadzone, both devices are currently in. The content delivery broker 30 is predicting the next needed connection to either a 5G cell tower or an alternative 5G device depending on the location and movement patterns of all devices connected to the carrier network.

Next, as illustrated at 3) of Fig. 1, both devices 10, 20 or alternatively only the second device 20 have left the 5G deadzone. Despite the availability of 5G, the first device 10 continues to stream the video from the second device 20 in order to save bandwidth in the current mobile cell continouisly utilizing the 5G D2D connection. The content delivery broker 30 continues to monitor and orchestrate the need for D2D connections using a corresponding predictive algorithm.

The use of a D2D service as outlined above may be expiration of content, signal strength comparison, pre-caching content based on user behavior and patterns, data stream is moving with the user, or AI based projection of needed bandwidth and content for a given location and date/time.

In view of the above, the D2D content delivery broker 30 may use deep neural network machine learning technology processing at least one of the following parameters and features calculating a D2D-score. The D2D-score indicates the need for content to be provided through a device-to-device communication and the generation of a mobile 5G based content delivery network, a 5G content delivery network. Said parameters and features fro calculating the D2D-score may be at least one of: timestamp of a given piece of content to calculate its refresh period and also an expiration date/time, cellular signal strength comparison to determine if Device to Device or Device to Cell Tower provides the better signal and connectivity for a specific content or data request, throughput vs. latency ratio to calculate the best connection, or projection of needed bandwidth and content for a given location and date/time based on historic and actual information.

In an embodiment, radio holes (dead zones) or particularly heavily frequented cell towers may be equipped with corresponding storage units, the content of which is frequently queried is stored or cached directly there. Thus, the D2D content delivery broker 30 may utilize said storage or cache to provide the respective data to the first mobile device 10, if required. That is, instead of receiving the content from another mobile device, the first mobile device 10 may receive the content from said storage or cache.

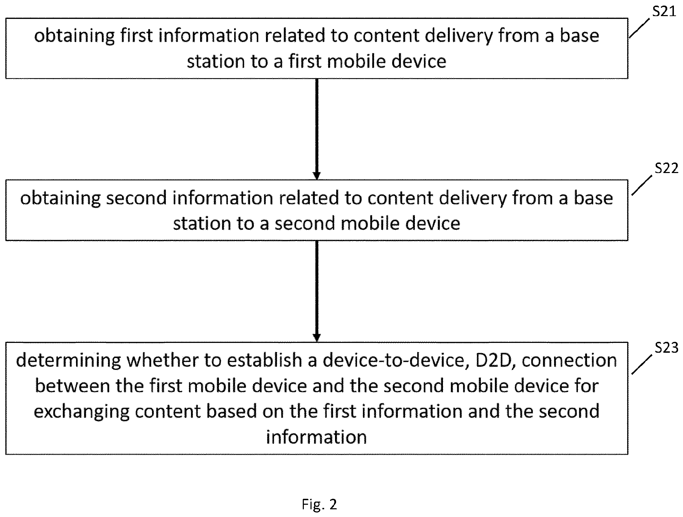

Fig. 2 shows a flowchart of a method according to an embodiment of the present disclosure. The method shown in Fig. 2 may be used in a D2D content delivery broker, e.g. a server, for content delivery control in a wireless network and comprises the following steps:
Step 21: obtaining first information related to content delivery from a base station to a first mobile device.
Step 22: obtaining second information related to content delivery from a base station to a second mobile device.
Step 23: determining whether to establish a D2D connection between the first mobile device and the second mobile device for exchanging content based on the first information and the second information.

In an embodiment, the first information comprises at least one of: location data, movement patterns, timestamps of a given piece of content, cellular signal strength, throughput, latencies, historical and/or actual information on needed bandwidth and content for a given location, or actual capacity and utilization of the first mobile device.

In an embodiment, the second information comprises at least one of: location data, movement patterns, timestamps of a given piece of content, cellular signal strength, throughput, latencies, historical and/or actual information on needed bandwidth and content for a given location, or actual capacity and utilization of the second mobile device.

In an embodiment, the method further comprises: upon said determining whether to establish a D2D connection between the first mobile device and the second mobile device (20), informing the first mobile device and/or the second mobile device about the determination, so that the first mobile device can establish a D2D connection with the second mobile device.

In an embodiment, the mobile devices that are close to a base station/cell tower are served by the base station only, that is, those mobile devices will operate in the cellular mode. The mobile devices that are far from the base station, in congested areas or at the cell edge or meeting any of the above detailed criteria for insufficient network access and are in proximity of another mobile device, may communicate through D2D links as determined by the D2D content delivery broker.

In an embodiment, the formation of direct links between mobile devices is dependent on the distance between them, which may be less than or equal to the threshold distance, d0. Thus, D2D link formation occurs when distance between any two mobile devices, m and n is such that d(m, n) ≤ d0.

In an embodiment, the method further comprises: after said determining whether to establish a D2D connection between the first mobile device and the second mobile device, continuing to obtaining the first information and the second information; and determining whether to keep the D2D connection between the first mobile device and the second mobile device for exchanging content based on the first information and the second information.

In an embodiment, the method further comprises informing the first mobile device and/or the second mobile device to release the D2D connection in case it is determined that the D2D connection is not to be kept.

In an embodiment, the determining whether to establish and/or keep the D2D connection between the first mobile device and the second mobile device comprises calculating a D2D-score based on the first information and the second information.

In an embodiment, the calculation of the D2D-score comprises the use of at least one machine learning algorithm.

As described above, the formula that may be used to decide whether a D2D connection is established depends in principle on the distance between two devices being less than the distance of one of the two devices to the base station (radio cell/antenna): d(m, n) ≤ d0.

In an embodiment, the machine learning algorithm may calculate a probability (the D2D-score) with which a mobile device should establish a D2D connection at a given time, in a given radio cell, and based on the predicted data demand of that device, thus relieving a radio cell and ensuring data transmission for the mobile device. That is, the D2D-score calculates the probability that d(m, n) ≤ d0, occurs.

In an embodiment, the method further comprises: determining content that is frequently used and/or areas of weak mobile signal strength and/or base stations that are frequently used; and signaling to a base station to store content based on said determination.

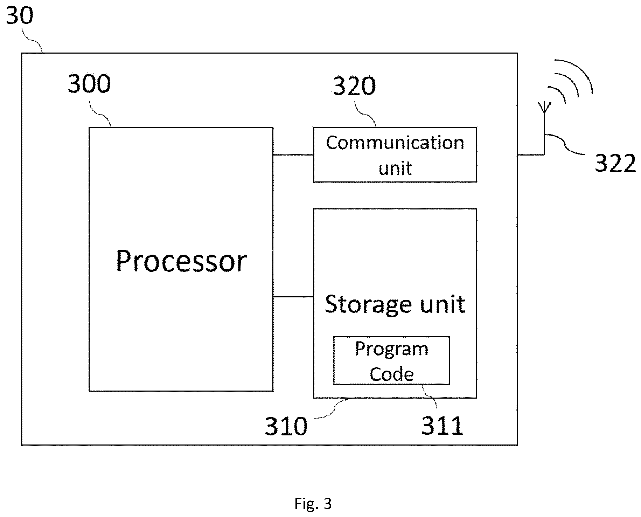

Fig. 3 relates to a schematic diagram of a content delivery broker 30 according to an embodiment of the present disclosure. The content delivery broker 30 may be a server, a mobile device, a portable computer system or a stationary computer system and is not limited herein. The content delivery broker 30 may include a processor 300 such as a microprocessor or Application Specific Integrated Circuit (ASIC), a storage unit 310 and a communication unit 320. The storage unit 310 may be any data storage device that stores a program code 311, which is accessed and executed by the processor 300. Embodiments of the storage unit 311 include but are not limited to a read-only memory (ROM), flash memory, random-access memory (RAM), hard-disk, and optical data storage device. The communication unit 320 may be a transceiver and is used to transmit and receive signals (e.g. messages or packets) according to processing results of the processor 300. In an embodiment, the communication unit 320 transmits and receives the signals via at least one antenna 322 shown in Fig. 3.

In an embodiment, the storage unit 310 and the program code 311 may be omitted and the processor 300 may include a storage unit with stored program code.

The processor 300 may implement any one of the steps in exemplified embodiments on the content delivery broker 30, e.g., by executing the program code 311.

The communication unit 320 may be a transceiver. The communication unit 320 may as an alternative or in addition be combining a transmitting unit and a receiving unit configured to transmit and to receive, respectively, signals to and from a wireless network node (e.g. a base station).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for content delivery control in a wireless network, the method comprising:
obtaining first information related to content delivery from a base station to a first mobile device (10);
obtaining second information related to content delivery from a base station to a second mobile device (20); and
determining whether to establish a device-to-device, D2D, connection between the first mobile device (10) and the second mobile device (20) for exchanging content based on the first information and the second information.

2. The method of claim 1, wherein the first information comprises at least one of: location data, movement patterns, timestamps of a given piece of content, cellular signal strength, throughput, latencies, historical and/or actual information on needed bandwidth and content for a given location, or actual capacity and utilization of the first mobile device (10).

3. The method of claim 1 or 2, wherein the second information comprises at least one of: location data, movement patterns, timestamps of a given piece of content, cellular signal strength, throughput, latencies, historical and/or actual information on needed bandwidth and content for a given location, or actual capacity and utilization of the second mobile device (20).

4. The method of any one of claims 1 to 3, further comprising:
upon said determining whether to establish a D2D connection between the first mobile device (10) and the second mobile device (20), informing the first mobile device (10) and/or the second mobile device (20) about the determination, so that the first mobile device (10) can establish a D2D connection with the second mobile device (20).

5. The method of any one of claims 1 to 4, further comprising:
after said determining whether to establish a D2D connection between the first mobile device (10) and the second mobile device (20), continuing to obtaining the first information and the second information; and
determining whether to keep the D2D connection between the first mobile device (10) and the second mobile device (20) for exchanging content based on the first information and the second information.

6. The method of claim 5, further comprising:
informing the first mobile device (10) and/or the second mobile device (20) to release the D2D connection in case it is determined that the D2D connection is not to be kept.

7. The method of any one of claims 1 to 6, wherein the determining whether to establish and/or keep the D2D connection between the first mobile device (10) and the second mobile device (20) comprises calculating a D2D-score based on the first information and the second information.

8. The method of claim 7, wherein the calculation of the D2D-score comprises the use of at least one machine learning algorithm.

9. The method of any one of claims 1 to 8, further comprising:
determining content that is frequently used and/or areas of weak mobile signal strength and/or base stations that are frequently used; and
signaling to a base station to store content based on said determination.

10. A content delivery broker (30) comprising:
a communication unit (320) configured to receive first information related to content delivery from a base station to a first mobile device (10) and configured to receive second information related to content delivery from a base station to a second mobile device (20), and
a processor (300) configured to determine whether to establish a device-to-device, D2D, connection between the first mobile device (10) and the second mobile device (20) for exchanging content based on the first information and the second information.

11. A computer program product comprising a computer-readable program medium code stored thereupon, the code, when executed by a processor, causing the processor to implement a method recited in any one of claims 1 to 9.
